# EUROPEAN PATENT SPECIFICATION

(11) **EP 1 471 505 B1**
(45) Date of publication and mention of the grant of the patent: **25.01.2006**
(21) Application number: 04251674.0
(22) Date of filing: 23.03.2004
(51) Int. Cl.: G11B 7/0037, G11B 19/12

(54) **Information reproducing apparatus, information reproducing method, and recording medium on which information reproduction processing program is computer-readably recorded**
Datenlesegerät, Datenleseverfahren, und Datenträger mit Computer gespeichertem Datenleseprogram
Appareil de lecture d'informations, méthode de lecture, et support d'informations sur lequel est enregistré un programme de lecture d'informations executable par un ordinateur

(30) Priority: 21.04.2003 JP 2003115295
(43) Date of publication of application: 27.10.2004
(73) Proprietor: Pioneer Corporation, Tokyo-to (JP)
(72) Inventor: Matsuda, Norio, Pioneer Corporation, Kawagoe-shi, Saitama-ken (JP)
(74) Representative: Townsend, Victoria Jayne

(56) References cited:
- EP-A- 0 862 164
- EP-A- 1 111 603
- US-A1- 2002 145 962
- US-B1- 6 463 022

## Description

### BACKGROUND OF THE INVENTION

### 1. Field of the Invention

The present invention relates to a technical field of an information reproducing apparatus and so on comprising an information obtaining device which obtains necessary information for reproduction from a loaded recording medium and a reproduction control device which exerts control to reproduce recorded information from the recording medium based on the obtained information.

### 2. Related Art

In recent years, various types of recording media are appearing in the market. For instance, optical disks are divided into types of a CD (Compact Disc) and a DVD (Digital Versatile Disc) according to a difference in recording density. Furthermore, the CDs are divided into the types of a CD-ROM diffused mainly on computer-related use and a CD-DA (Digital Audio) diffused mainly on musical use, and recording forms thereof are divided into the types of a single session and a multisession and the types having a file system and not having it. The optical disks may also be divided into the types of reproduction-only (CD-ROM or DVD-ROM for instance) and reproduction and recording (CD-R or DVD-R for instance).

Even in the case of such different types of optical disks, an information reproducing apparatus in the past can reproduce recorded information with the same reproduction mechanism. Normally, when the optical disk is inserted into such an information reproducing apparatus, the apparatus automatically determines a type of the inserted optical disk, and obtains necessary information for reproduction according to the type so as to reproduce the recorded information from the optical disk.

Such an information reproducing apparatus retries a determination process or an obtaining process several times or performs another determination process in consideration of the cases where it is difficult to determine the type of the optical disk because of a blemish or dirt sticking on the optical disk or insertion of a nonstandard optical disk (in the case of the CD, incapable of correctly reading TOC information or sub-code information for instance) or the cases where the determination of the optical disk is wrong and it is difficult to obtain the necessary information for reproduction. And in the case where neither the determination nor obtaining process is possible after all, it performs an error process (error indication of being indeterminable, ejection of the optical disk and so on).

It is anticipated that the types of the optical disk will increase in future, and the number of automatic determinations made by the information reproducing apparatus and necessary time therefor and also the time for obtaining the necessary information for reproduction will increase in conjunction with it. Therefore, it is required that each automatic determination process of the type of the optical disk should be performed in as short a time as possible and be correct, and various determination methods thereof are proposed. See, for example, US Patent Application Publication No. US 2002/0145962 A1 wich reflects the preamble of claim 1.

As an example thereof, the above Patent Document discloses an optical disk reproducing apparatus capable of determining the type of the CD and the DVD relatively in a short time.

Regarding various determination methods of an information reproducing apparatus in the past, however, it cannot help retrying a determination or obtaining process or performing another determination process in the case where it is difficult to determine a type of an optical disk because of a blemish or dirt sticking on the optical disk or insertion of a nonstandard optical disk or in the case where the determination of the optical disk is wrong and it is difficult to obtain the necessary information for reproduction. And even if the optical disk is finally determined, it takes a very long time (one minute or so, for instance) from the insertion of the disk to a start of the reproduction. As it is anticipated that the types of the optical disk will increase in future, the more types of the optical disk the information reproducing apparatus supports, the more time will be required for the determination.

### SUMMARY OF THE INVENTION

Thus, the present invention is intended to resolve the inconvenience as an issue, and an object thereof is to provide the information reproducing apparatus, information reproducing method and so on capable of reducing as much as possible the time from the insertion into the apparatus to the start of the reproduction of a plurality of types of recording media such as the optical disk.

The above obj ect of the present invention can be achieved by an information reproducing apparatus comprising an information obtaining device which obtains necessary information for reproduction from a loaded recording medium and a reproduction control device which exerts control to reproduce recorded information from the recording medium based on the obtained information, wherein the information reproducing apparatus is provided with: a selection request device which prompts a user to select a type of the recording medium; and a selection acceptance device which accepts selection of the type of the recording medium from the user, wherein the information obtaining device obtains the necessary information for reproduction from the recording medium according to the selected type of the recording medium.

The above obj ect of the present invention can be achieved by an information reproducing method of an information reproducing apparatus, wherein the information reproducing method provided with: a process which prompts a user to select a type of a loaded recording medium; a process which accepts selection of the type of the recording medium from the user; a process which obtains necessary information for reproduction from the recording medium according to the selected type of the recording medium; and a process which reproduces recorded information from the recording medium based on the obtained information.

The above obj ect of the present invention can be achieved by a recording medium on which an information reproduction processing program is computer-readably recorded, wherein the information reproduction processing program causes a computer included in an information reproducing apparatus to perform the functions of: prompting a user to select a type of a loaded recording medium; accepting selection of the type of the recording medium from the user; obtaining necessary information for reproduction from the recording medium according to the selected type of the recording medium; and controlling the reproduction of recorded information from the recording medium based on the obtained information.

### BRIEF DESCRIPTION OF THE DRAWINGS

FIG. 1 is a diagram showing an overview configuration example of a disk reproducing apparatus;
FIG. 2 is a flowchart showing a process of a system control portion 6 according to a first embodiment;
FIG. 3 is a flowchart showing the process of the system control portion 6 according to the first embodiment;
FIG. 4 is a flowchart showing the process of the system control portion 6 according to a second embodiment; and
FIG. 5 is a flowchart showing the process of the system control portion 6 according to the second embodiment.

### DESCRIPTION OF THE PREFERRED EMBODIMENTS

Next, preferred embodiments of the present invention will be described based on the drawings. The embodiments described below are those in the case of applying the present invention to a disk reproducing apparatus which reproduces information recorded on an optical disk as an example of a recording medium.

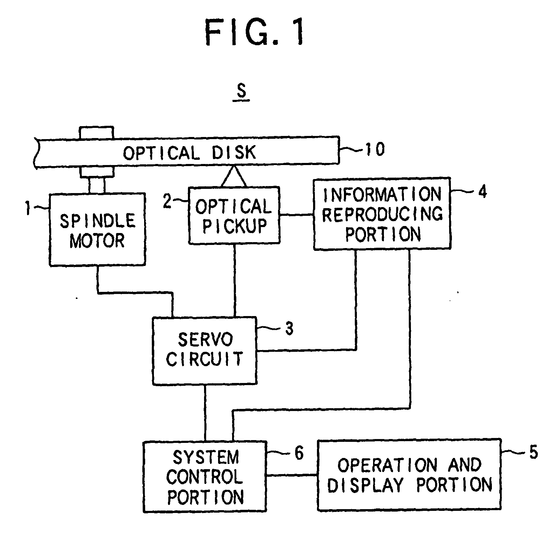

First, a configuration and functions of the disk reproducing apparatus according to this embodiment will be described by referring to FIG. 1.

FIG. 1 is a diagram showing an overview configuration example of the disk reproducing apparatus. As shown in FIG. 1, a disk reproducing apparatus S is comprised of a spindle motor 1, an optical pickup 2, a servo circuit 3, an information reproducing portion 4, operation and display portion 5, a system control portion 6 to control the components and so on. An optical disk 10 is loaded on a tray in an unshown loading mechanism provided to the disk reproducing apparatus S so as to be inserted (carried) into the apparatus S.

The spindle motor 1 rotates the optical disk 10 placed at a predetermined clamp position on an unshown turntable at a fixed linear velocity.

The optical pickup 2 irradiates the optical disk 10 with a light beam by means of an unshown semiconductor laser element and detects reflected light thereof with an optical sensor so as to output a detection signal thereof to the servo circuit 3 and the information reproducing portion 4. The semiconductor laser element is comprised of a DVD laser element which emits the light beam of 650 nm wavelength for a DVD and a CD laser element which emits the light beam of 780 nm wavelength for a CD. These elements emit the light beam with a driving current from an unshown drive circuit controlled by the system control portion 6. The optical pickup 2 also has an actuator comprised of a focusing portion which moves an unshown objective lens in an optical axis direction and a tracking portion which moves the objective lens in a disk radius direction vertical to an optical axis.

Under the control of the system control portion 6, the servo circuit 3 generates a tracking error signal and a focus error signal based on the detection signal outputted from the optical pickup 2. Based on these signals, it exerts servo control over the spindle motor 1 and optical pickup 2, that is, it controls speeds of the optical pickup 2 and optical disk 10, a track position, a focus of a condenser lens and so on by forming a closed circuit loop. The servo circuit 3 also digitizes the generated tracking error signal, and supplies the digitized signal to the system control portion 6.

Under the control of the system control portion 6, the information reproducing portion 4 converts the detection signal outputted from the optical pickup 2 into an RF (Radio Frequency) signal with an RF amplifier and digitizes it, and then performs an EFM (Eight to Fourteen Modulation) demodulation process, an error correction process and so on, so as to restore recorded information (data) of the optical disk 10. And the information reproducing portion 4 decodes the restored recorded information (video data, audio data, a computer program, data and so on) and thereby reproduces the recorded information. Of the reproduced recorded information, the video data is outputted to a display via an unshown drawing processing circuit, the audio data is outputted to a speaker via an unshown speech processing circuit, and the computer program and so on are outputted to the system control portion 6.

As for types of the optical disk 10, it is divided into the DVD and CD according to a difference in recording density of the recorded information. And in the case where the optical disk 10 is a CD, it is further divided into the types of a single session and a multisession. To be more specific, as publicly known, the CD has the information recorded thereon in a unit of a session, where one session is comprised of a lead-in area, a program area and a lead-out area in order from an inner circumference side. It is called the multisession in the case where a plurality of such sessions are formed on an information recording surface. Furthermore, as for types of the CD, it is divided into a CD audio (CD-DA) having the audio data and so on recorded thereon and a CD-ROM having the computer program, data and so on recorded thereon. Furthermore, in the case where the CD is the multisession, a public-domain file system (an information source capable of referring to files and directories recorded on the CD-ROM with a logical address (or a virtual address)) exists in a last session. As for the types of the CD, it is divided into the CD having the file system and the CD not having the file system.

In the case where the optical disk 10 is the CD, TOC (Table of Contents) information recorded in the lead-in area of the CD is supplied from the information reproducing portion 4 to the system control portion 6 under the control of the system control portion 6. The TOC information includes track numbers in the program area, absolute time of a starting position and an ending position of the recorded information, whether it is the single session or the multisession, whether it is the CD audio or the CD-ROM and so on.

The operation and display portion 5 comprises an operation instruction button to have various instructions (instructions for reproduction and stop of the optical disk 10, instructions for selection of the type of the optical disk 10 and instructions for selection of a mode, for instance) inputted by a user, and a display panel (a liquid crystal display panel, for instance) to display various kinds of information (a status of the apparatus S, the information on the optical disk 10, information prompting selection of the type of the optical disk 10, for instance) . For instance, if the operation instruction button is pressed by the user, an instruction signal corresponding to the pressed operation instruction button is outputted to the system control portion 6.

The system control portion 6 is comprised of a CPU (Central Processing Unit) having a computing function, an ROM (Read-Only Memory) to store various kinds of data and the programs (including an information reproduction processing program: it may be downloaded from a server on the Internet or recorded on the recording medium such as a CD to be provided, for instance), a working RAM (Random-Access Memory), a nonvolatile memory (an EEPROM (Electrically Erasable Programmable Read-Only Memory, for instance) to store and hold various settings and so on. As the CPU executes the programs, the system control portion 6 functions as a determination device, a selection request device, a selection acceptance device, an information obtaining device, a reproduction control device and a mode selection acceptance device.

To be more precise, the system control portion 6 determines the type of the loaded optical disk 10 as a determination device. For instance, the determination of whether it is the CD or the DVD is made based on the tracking error signal supplied from the servo circuit 3. The determinations of whether the CD is the single session or the multisession and whether it is the CD audio or the CD-ROM are made by the system control portion 6 based on the information included in the TOC information.

The system control portion 6 also prompts the user to select the type of the optical disk 10, as a selection request device, by displaying it on the display panel of the operation and display portion 5 for instance, and accepts the selection of the type of the optical disk 10 from the user via the operation and display portion 5 as a selection acceptance device. Thus, the user can also select the type of the optical disk 10 determinable by the system control portion 6 (determination device). This is because, under the normal circumstances, the user often knows the type of the optical disk 10 to be reproduced, and so the user should indicate the type of the optical disk 10 to the apparatus S instead of automatic determination by the apparatus S.

The system control portion 6 also obtains from the optical disk 10 the necessary information for the reproduction according to one of the determined type of the optical disk 10 and the type of the optical disk 10 selected by the user as an information obtaining device. Here, the necessary information for the reproduction, that is, the information necessary to reproduce the recorded information recorded in the program area includes the information recorded in the lead-in area (including the TOC information) for instance in the case of a CD. In the case of a DVD, the necessary information for the reproduction includes minimum read rate information (information to determine a read line speed on the reproduction) in physical format information recorded in the lead-in area and the information in a video manager recorded in the area following the lead-in area, for instance.

And the system control portion 6 exerts control to reproduce the recorded information from the optical disk 10 based on the necessary information for the reproduction as a reproduction control device. In controlling the reproduction of the recorded information, the system control portion 6 performs optimum reproduction settings (adj ustments necessary for the reproduction) according to the type of the optical disk 10 or the necessary information for the reproduction. Here, the reproduction settings mean the settings of various constants, parameters and so on in the spindle motor 1, optical pickup 2, servo circuit 3 and information reproducing portion 4. For instance, they include a focus adjustment, a tracking adjustment, an equalizing coefficient of the RF amplifier, an adjustment coefficient of the tracking error signal according to a difference in a track pitch, a servo gain, a PLL setting, an error correction method and a CD-ROM decoding method.

Here, the mode in which the system control portion 6 determines the type of the optical disk 10 is called a determination mode (determination mode by the determination device), and the mode in which the system control portion 6 accepts the selection of the type of the optical disk 10 is called a selection acceptance mode (selection acceptance mode by the selection acceptance device). The system control portion 6 may be constituted to accept from the user the selection of one of the determination mode and the selection acceptance mode via the operation and display portion 5 as a mode selection acceptance device and obtain the necessary information for the reproduction from the optical disk 10 according to the type of the optical disk 10 in the selected mode. The system control portion 6 may also be constituted to perform the determination mode and the selection acceptance mode in parallel and obtain the necessary information for the reproduction from the optical disk 10 according to the type of the optical disk 10 in a faster one of the determination mode and the selection acceptance mode.

Next, the operation of the disk reproducing apparatus S according to this embodiment will be described by dividing it into two examples of the first and second embodiments. The following embodiments are the examples wherein the optical disk 10 is reproduced automatically (without waiting for a reproduction instruction from the user) once the optical disk 10 is loaded on the loading mechanism of the disk reproducing apparatus S and inserted therein by the user.

### (First Embodiment)

The first embodiment is an example of the case where one of the determination mode and the selection acceptance mode is selected, and the necessary information for the reproduction is obtained according to the type of the optical disk 10 in the selected mode.

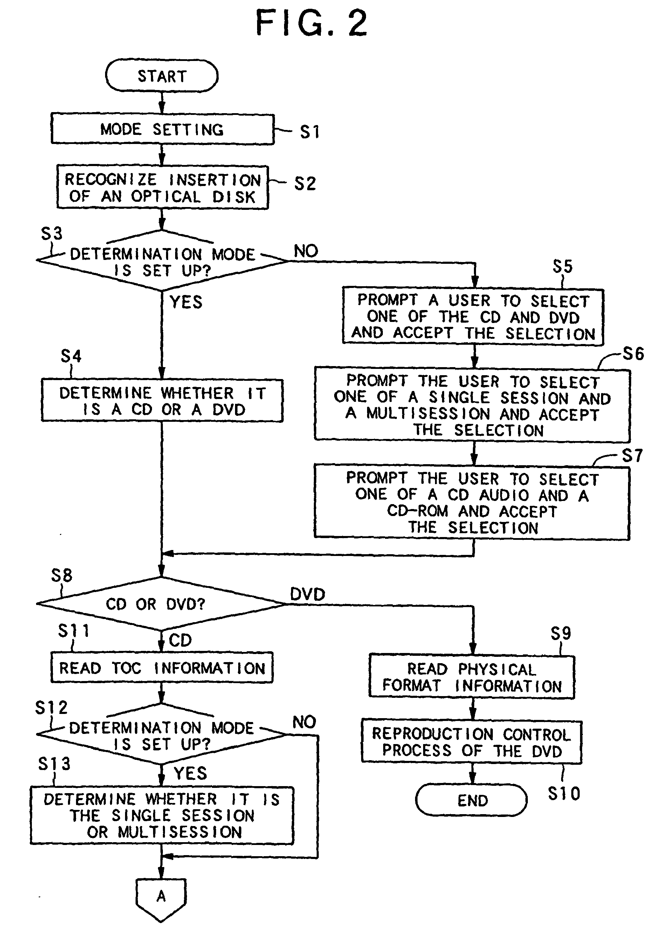

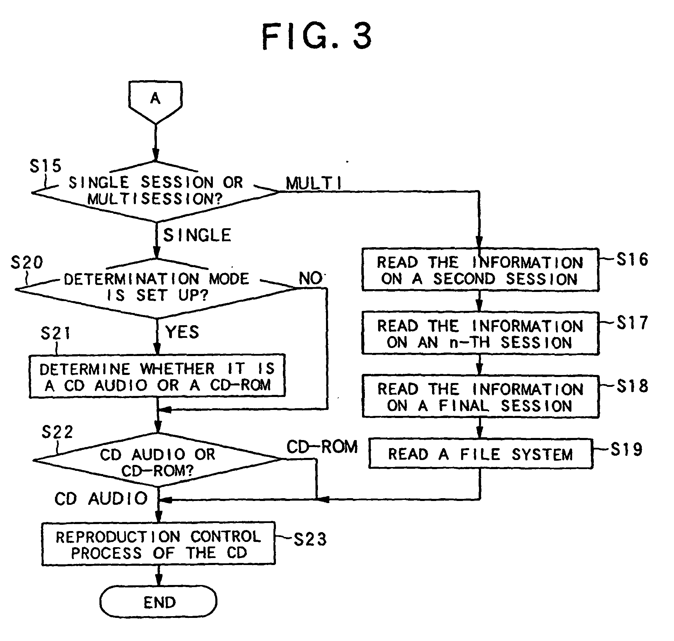

FIGs. 2 and 3 are flowcharts showing the processes of the system control portion 6 according to the first embodiment.

The system control portion 6 performs a mode setting of one of the determination mode and the selection acceptance mode in a step S1 of the process in FIG. 2. For instance, the system control portion 6 performs a display to prompt the selection of one of the determination mode and the selection acceptance mode on the display panel of the operation and display portion 5, and accordingly accepts and sets it in the mode selected by the user with the operation instruction button of the operation and display portion 5. It is also possible to set it in a stored mode in the case where the mode is already selected by the user and is stored in the nonvolatile memory.

Next, if the optical disk 10 is loaded on the loading mechanism of the disk reproducing apparatus S and inserted into it by the user, the system control portion 6 recognizes it (step S2), and performs loading control so as to move the optical pickup 2 to a predetermined position (home position) . The mode setting in the step S1 may also be performed between the insertion of the optical disk 10 and recognition of the insertion in the step S2 or after the recognition of the insertion in the step S2.

Next, the system control portion 6 determines whether or not the determination mode is set up (step S3). In the case where the determination mode is set up (step S3: Y), it performs the determination (first determination) process to determine whether the optical disk 10 is the CD or the DVD (step S4).

In the determination process S4, for instance, the system control portion 6 provides a control instruction to the optical pickup 2 and the servo circuit 3 to radially move the light beam from a CD laser element across a track while irradiating the optical disk 10 with it. In the case where the number of the digitized signals (pulses) of the tracking error signals supplied from the servo circuit 3 while traversing the track becomes a defined value or more, the system control portion 6 determines the type of the optical disk 10 to be that of a CD. And in the case where it is below the defined value, the type of the optical disk 10 is determined to be that of a DVD. It is a determination method taking advantage of the fact that, even if an irradiation position of the light beam from a CD laser element traverses the track of the optical disk 10 in the case where the optical disk 10 is a DVD, a fluctuation margin of the tracking error signals is small and there is no fluctuationmargin to the predetermined level unlike the case where it is a CD. The method of determining whether it is the CD or the DVD is not limited thereto. But it is also possible to adopt any method such as the one whereby the optical disk 10 is rotated at a defined rotation speed to measure a maximum pit length or a minimum pit length therefrom at the time so as to determine a disk type from the size of the pit length.

In the case where the determination mode is not set up in the step S3 (step S3: N), that is, in the case where the selection acceptance mode is set up, the system control portion 6 first performs a display which prompts the user to select whether the optical disk 10 is the CD or the DVD on the display panel of the operation and display portion 5, and accepts a selection of one of the CD and the DVD (first selection acceptance) if made accordingly by the user with the operation instruction button of the operation and display portion 5 (step S5).

Subsequently, the system control portion 6 performs a display which prompts the user to select whether the optical disk 10 is the single session or the multisession on the display panel of the operation and display portion 5, and accepts a selection of one of the single session and the multisession (second selection acceptance) if made accordingly by the user with the operation instruction button of the operation and display portion 5 (step S6).

Subsequently, the system control portion 6 performs a display which prompts the user to select whether the optical disk 10 is the CD audio or the CD-ROM on the display panel of the operation and display portion 5, and accepts a selection of one of the CD audio and the CD-ROM (third selection acceptance) if made accordingly by the user with the operation instruction button of the operation and display portion 5 (step S7).

Next, from the determination results in the step S4 or the selection acceptance results in the step S5, the system control portion 6 determines whether the loaded optical disk 10 is the CD or the DVD (step S8), and moves on to a step S11 in the case where it is the CD or moves on to a step S9 in the case where it is the DVD.

In the step S9, the system control portion 6 provides the control instruction to the optical pickup 2, the servo circuit 3 and so on to read the physical format information recorded in the lead-in area of the DVD and the video manager recorded in the area following the lead-in area so as to read and obtain the read physical format information and so on as necessary information for the reproduction from the information reproducing portion 4. And the system control portion 6 provides to the optical pickup 2, the servo circuit 3 and information reproducing portion 4 the control instruction for a reproduction control process of the DVD, that is, to reproduce the recorded information from the program area of the DVD based on the necessary information for the reproduction (step S10). Thus, the recorded information is reproduced from the DVD.

In the step S11, the system control portion 6 provides the control instruction to the optical pickup 2, the servo circuit 3 and so on to read the TOC information recorded in the lead-in area of the first session of the CD so as to read and obtain the read TOC information from the information reproducing portion 4.

Next, the system control portion 6 determines whether or not the determination mode is set up (step S12). In the case where the determination mode is set up (step S12: Y), it performs the determination (second determination) process to determine whether the optical disk 10 is the single session or the multisession (step S13). In the determination process, the system control portion 6 determines whether it is the single session or the multisession from the information indicating it included in the read TOC information (identified from an address bit in the TOC information, for instance).

In the case where the determination mode is not set up in the step S12 (step S12: N), that is, the selection acceptance mode is set up, it passes by the determination process in the step S13.

Next, in the process in FIG. 3, the system control portion 6 determines whether the loaded optical disk 10 is the single session or the multisession from the determination results in the step S13 or the selection acceptance results in the step S6 (step S15). It moves on to the step S20 in the case of the single session, and moves on to the step S16 in the case of the multisession.

In the step S16, the system control portion 6 obtains a lead time of the next session from the TOC information and provides the control instruction to the optical pickup 2, the servo circuit 3 and so on to read the information recorded in the lead-in area of the second session of the CD so as to read the read information from the information reproducing portion 4 (step S16) and obtains it. Thereafter, the system control portion 6 likewise reads the information recorded in the lead-in areas of all the sessions from the second session through a final session as the necessary information for the reproduction (steps S17 and S18) and obtains it. Subsequently, the system control portion 6 reads the file system in the final session as the necessary information for the reproduction (steps S19) and obtains it. It is also possible to have a configuration wherein the system control portion 6 accepts the selection of the type having or not having the file system from the user and reads it only in the case where the type having the file system is selected.

And the system control portion 6 provides to the optical pickup 2, the servo circuit 3 and the information reproducing portion 4 the control instruction for the reproduction control process of amultisession CD, that is, to reproduce the recorded information from the program area of the CD (step S23). Thus, the file is read to the system control portion 6.

In the step S20, the system control portion 6 determines whether or not the determination mode is set up (step S20). In the case where the determination mode is set up (step S20: Y), it performs the determination (third determination) process to determine whether the optical disk 10 is the CD audio or the CD-ROM (step S21). In the determination process, the system control portion 6 determines whether it is the CD audio or the CD-ROM from the information indicating it included in the read TOC information (identified from a control bit in the TOC information, for instance).

In the case where the determination mode is not set up in the step S20 (step S20: N), that is, the selection acceptance mode is set up, it passes by the determination process in the step S21.

Next, the system control portion 6 determines whether the loaded optical disk 10 is the CD audio or the CD-ROM from the determination results in the step S21 or the selection acceptance results in the step S7 (step S22). And the system control portion 6 obtains the necessary information for the reproduction from the read TOC information, for instance, according to whether it is the CD audio or CD-ROM, and provides to the optical pickup 2, the servo circuit 3 and the information reproducing portion 4 the control instruction for the reproduction control process of the CD, that is, to reproduce the recorded information from the program area of the CD based on the obtained information (step S23). Thus, the audio data is reproduced from the first track in the case of the CD audio, and the program data and so on are mutely reproduced in the case of the CD-ROM.

### (Second Embodiment)

A second embodiment is an example of the case where the determination mode and the selection acceptance mode are in parallel, and the necessary information for the reproduction is obtained according to the type of the optical disk 10 in a faster one of the determination mode and the selection acceptance mode.

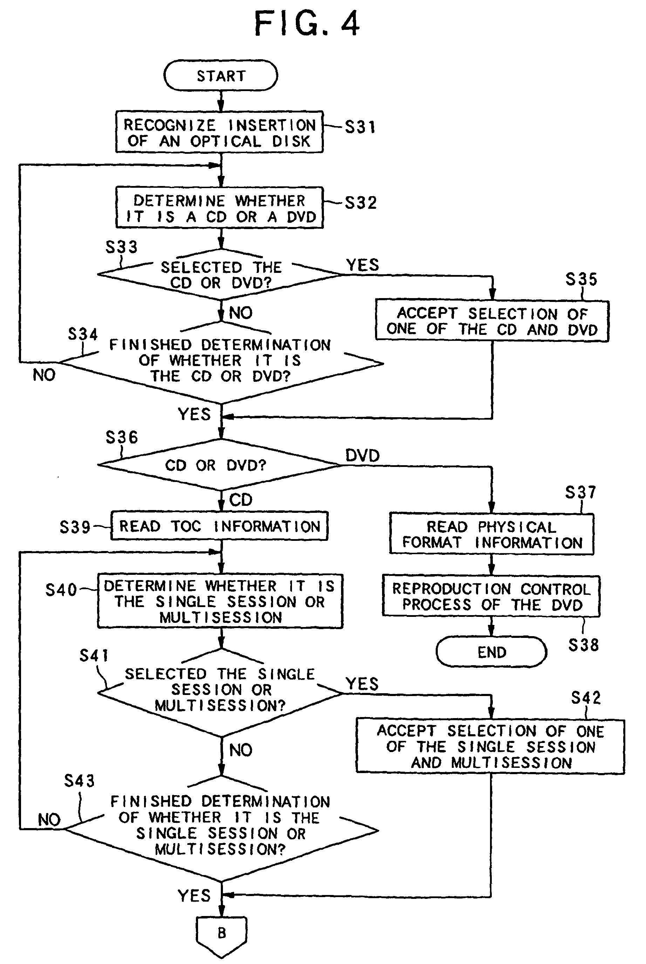

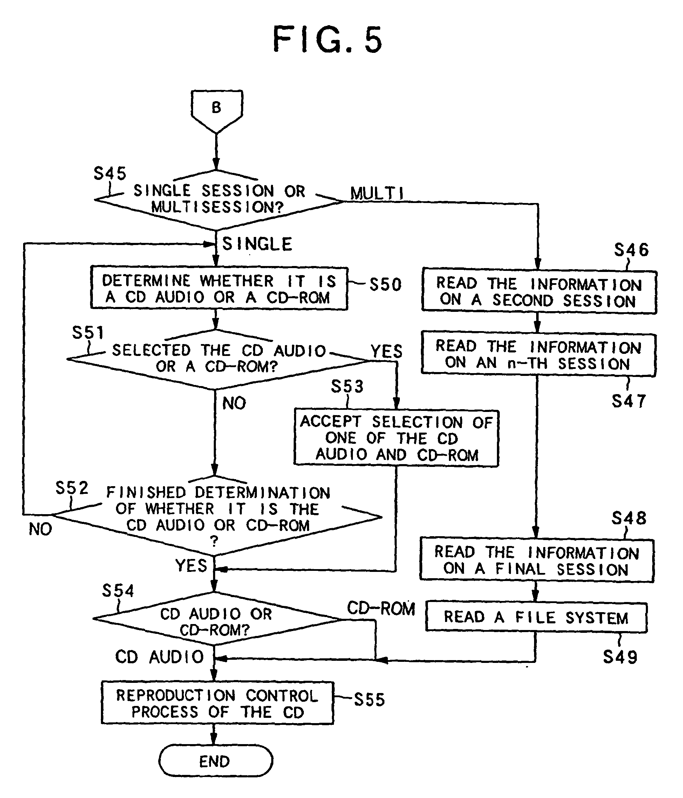

FIGs. 4 and 5 are flowcharts showing the processes of the system control portion 6 according to the second embodiment.

In the process in FIG. 4, if the optical disk 10 is loaded on the loading mechanism of the disk reproducing apparatus S and inserted therein by the user, the system control portion 6 recognizes it (step S31) and exerts the loading control to move the optical pickup 2 to the predetermined position (home position).

Next, the system control portion 6 performs the determination (first determination) process to determine whether the optical disk 10 is the CD or the DVD by the same method as in the first embodiment (step S32). During the determination, that is, from the beginning to the end of the determination process (step S34:N), the system control portion 6 performs the display which prompts the user to select whether the optical disk 10 is the CD or the DVD on the display panel of the operation and display portion 5, and accepts a selection of one of the CD and the DVD (first selection acceptance) (step S35) if made accordingly by the user with the operation instruction button of the operation and display portion 5 (step S33: Y) so as to move on to the step S36. To be more specific, in the case where there is the first selection acceptance during the first determination, the system control portion 6 stops the first determination and moves on to the next step.

In the case where the determination process is finished with no selection made by the user with the operation instruction button of the operation and display portion 5 during the determination (step S34: Y), the system control portion 6 moves on to the step S36.

Next, in the step S36, the system control portion 6 determines whether the loaded optical disk 10 is the CD or the DVD from the determination results in the step S32 or the selection acceptance results in the step S35. And it moves on to the step S39 in the case of the CD, and moves on to the step S37 in the case of the DVD. To be more specific, the system control portion 6 obtains the necessary information for the reproduction according to the type of the optical disk 10 in a faster one of the determination mode and the selection acceptance mode (faster one of the determination and selection acceptance of the type of the optical disk 10). To be more specific, the type of the optical disk 10 according to the selection has priority if the user's selection is prompt.

The processes in the steps S37 through S39 are the same as those in the steps S9 through S11 in the first embodiment, and so a description thereof will be omitted.

Next, the system control portion 6 performs the determination (second determination) process to determine whether the optical disk 10 is the single session or the multisession by the same method as in the first embodiment (step S40). During the determination, that is, from the beginning to the end of the determination process (step S43: N), the system control portion 6 performs the display which prompts the user to select whether the optical disk 10 is the single session or the multisession on the display panel of the operation and display portion 5, and accepts a selection of one of the single session and the multisession (second selection acceptance) (step S42) if made accordingly by the user with the operation instruction button of the operation and display portion 5 (step S41: Y) so as to move on to the step S45 shown in FIG. 5. To be more specific, in the case where there is the second selection acceptance during the second determination, the system control portion 6 stops the second determination and moves on to the next step.

In the case where the determination process is finished with no selection made by the user with the operation instruction button of the operation and display portion 5 during the determination (step S43: Y), the system control portion 6 moves on to the step S45 shown in FIG. 5.

Next, in the step S45 in FIG. 5, the system control portion 6 determines whether the loaded optical disk 10 is the single session or the multisession from the determination results in the step S40 or the selection acceptance results in the step S42. And it moves on to the step S50 in the case of the single session, and moves on to the step S46 in the case of the multisession.

The processes in the steps S46 through S49 are the same as those in the steps S16 through S19 in the first embodiment, and so a description thereof will be omitted.

Here, according to this embodiment, it is constituted to accept the selection of one of the single session and the multisession from the user during the determination in the step S40 in FIG. 4. It is also possible, as another example, to have the configuration wherein, after the determination process in the step S40 in FIG. 4 is finished, the selection of one of the single session and the multisession is accepted from the user during the processes in the steps S46 through S49 (while obtaining the necessary information for the reproduction). Thus, it is possible to promptly cope with it even in the case where the determination of the system control portion 6 is wrong and it takes time to obtain the necessary information for the reproduction (due to a retry and so on) .

Next, the system control portion 6 performs the determination (third determination) process to determine whether the optical disk 10 is the CD audio or the CD-ROM by the same method as in the first embodiment (step S50). During the determination, that is, from the beginning to the end of the determination process (step S52: N), the system control portion 6 performs the display which prompts the user to select whether the optical disk 10 is the CD audio or the CD-ROM on the display panel of the operation and display portion 5, and accepts a selection of one of the CD audio or the CD-ROM (third selection acceptance) (step S53) if made accordingly by the user with the operation instruction button of the operation and display portion 5 (step S51: Y) so as to move on to the step S54. To be more specific, in the case where there is the third selection acceptance during the third determination, the system control portion 6 stops the third determination and moves on to the next step.

In the case where the determination process is finished with no selection made by the user with the operation instruction button of the operation and display portion 5 during the determination (step S52: Y), the system control portion 6 moves on to the step S54.

The processes in the steps S54 and S55 are the same as those in the steps S22 and S23 in the first embodiment, and so a description thereof will be omitted.

As described above, according to the embodiment, even in the case where it is difficult to determine the type of the optical disk 10 because of a blemish or dirt sticking on the optical disk or insertion of a nonstandard optical disk, it is possible to have the type of the optical disk 10 selected by the user and obtain the necessary information for the reproduction according to the selected type so as to reproduce the recorded information based on it. Therefore, it is possible to significantly reduce the time from the insertion of the optical disk 10 into the apparatus S to the start of the reproduction thereof (for instance, the required time of 1 minute or so to the start of the reproduction can be reduced to 10 seconds or so).

It is also possible to obtain the necessary information for the reproduction according to the type of the optical disk 10 in the faster one of the determination mode and the selection acceptance mode so as to reproduce the recorded information based on it. Therefore, it is possible to have the type selected by the user if the determination process of the type of the optical disk 10 seems to take time. It is possible to leave it to the determination process otherwise. That can further improve convenience.

According to the embodiment, the system control portion 6 performs the display which prompts the user to select the type of the optical disk 10 on the display panel of the operation and display portion 5. However, it is not limited thereto, and it may also prompt the user to select it by voice from a speaker for instance.

According to the embodiment, the user selects the type of the optical disk 10 with the operation instruction button of the operation and display portion 5, and the system control portion 6 accepts the selection. However, it is not limited thereto. For instance, the disk reproducing apparatus S may be equipped with a microphone which collects the voice generated by the user and the voice recognition device which recognizes the voice. And if the user is prompted to select the type of the optical disk 10 (by the display or voice) and the user selects the type by uttering the voice ("DVD," "For music (CD audio)," "Single (single session)" and so on) in the steps S5 to S7 in FIG. 2 for instance, the microphone collects the voice, and the voice recognition device in the system control portion 6 accepts and recognizes the voice so that the system control portion 6 accepts the selection of the type of the optical disk 10.

A publicly known technique may be applied to the voice recognition. For instance, the system control portion 6 may analyze the voice (voice signal) collected at predetermined time intervals to extract a characteristic amount. And it calculates a ratio of matching between the characteristic amount of the voice signal and the data on the characteristic amount of recognized words indicated by HMM (Hidden Markov Models) stored in a database in advance, that is, a probability that the characteristic amount of the voice signal indicates characteristic amount data, and also adds up the probabilities of all the uttered voices so as to confirm the recognized word of the highest added-up probability as a recognition result.

According to such a configuration, the user can select the type of the optical disk 10 without a feeling of strangeness.

The embodiment took classifications of a CD and a DVD, the single session and the multisession, and a CD audio and a CD-ROM as examples of types of the optical disk 10, and described the determination and selection acceptance of these types. However, it is not limited thereto, and it is also possible to take as examples the classifications of reproduction-only optical disks (CD-ROM, DVD-ROM and so on) and reproduction and recording optical disks (CD-R, DVD-R, DVD-RAM, DVD-R/W and so on) or the classification of the DVD and optical disks of a higher density than the DVD so as to perform the determination and selection acceptance of these types. The determination process of the types of the optical disk 10 in the system control portion 6 is not limited to the determination process described in the embodiment, but any other determination process is applicable.

The embodiment described the information reproducing apparatus of the present invention by taking the disk reproducing apparatus as an example. However, it is not limited thereto, and it may also be applied, for instance, to a disk recording and reproducing apparatus which records and reproduces the information on the optical disk.

## Claims

1. An information reproducing apparatus (S) comprising an information obtaining device (6) which obtains necessary information for reproduction from a loaded recording medium (10) and a reproduction control device (6) which exerts control to reproduce recorded information from the recording medium (10) based on the obtained information, **characterized in that** the information reproducing apparatus (S) comprises:
a selection request device (6) which prompts a user to select a type of the recording medium (10); and
a selection acceptance device (6) which accepts selection of the type of the recording medium (10) from the user,
wherein the information obtaining device (6) obtains the necessary information for reproduction from the recording medium (10) according to the selected type of the recording medium (10).

2. The information reproducing apparatus (S) according to claim 1, **characterized in that** the information reproducing apparatus (S) further comprising:
a determination device (6) which determines the type of the recording medium (10); and
a mode selection acceptance device (6) which accepts from the user selection of one of a determination mode by the determination device (6) and a selection acceptance mode by the selection acceptance device (6), and wherein
the information obtaining device (6) obtains the necessary information for the reproduction from the recording medium (10) according to the type of the recording medium (10) in the selected mode.

3. The information reproducing apparatus (S) according to claim 2, **characterized in that** the determination device (6) performs at least one of a first determination, a second determination, and a third determination, the first determination determining whether the type of the recording medium (10) is a CD or a DVD, the second determination determining whether the type of the recording medium (10) is a single session or a multisession, and the third determination determining whether the type of the recording medium (10) is a CD audio or a CD-ROM, and
the selection acceptance device (6) performs at least one of a first selection acceptance, a second selection acceptance, and a third selection acceptance, the first selection acceptance accepting the selection of whether the type of the recording medium (10) is the CD or the DVD, the second selection acceptance accepting the selection of whether the type of the recording medium (10) is the single session or the multisession, and the third selection acceptance accepting the selection of whether the type of the recording medium (10) is the CD audio or the CD-ROM.

4. The information reproducing apparatus (S) according to claim 2, **characterized in that** the selection acceptance device (6) accepts the selection of the type of the recording medium (10) during the determination of the type of the recording medium (10) by the determination device (6).

5. The information reproducing apparatus (S) according to claim 4, **characterized in that** the determination device (6) performs at least one of a first determination, a second determination, and a third determination, the first determination determining whether the type of the recording medium (10) is a CD or a DVD, the second determination determining whether the type of the recording medium (10) is a single session or a multisession, and the third determination determining whether the type of the recording medium (10) is a CD audio or a CD-ROM, and
the selection acceptance device (6) performs at least one of a first selection acceptance, a second selection acceptance, and a third selection acceptance, the first selection acceptance accepting the selection of whether the type of the recording medium (10) is the CD or the DVD during the first determination by the determination device (6), the second selection acceptance accepting the selection of whether the type of the recording medium (10) is the single session or the multisession during the second determination by the determination device (6), and the third selection acceptance accepting the selection of whether the type of the recording medium (10) is the CD audio or the CD-ROM during the third determination by the determination device (6).

6. The information reproducing apparatus (S) according to claim 5, **characterized in that** the determination device (6) stops the first determination and moves onto the second determination in the case where the first selection acceptance is performed by the selection acceptance device (6) during the first determination.

7. The information reproducing apparatus (S) according to claim 5 or 6, **characterized in that** the determination device (6) stops the second determination and moves onto the third determination in the case where the second selection acceptance is performed by the selection acceptance device (6) during the second determination.

8. The information reproducing apparatus (S) according to claim 1, **characterized in that** the selection acceptance device (6) accepts the selection of the type of the recording medium (10) while the information obtaining device (6) is obtaining the necessary information for the reproduction.

9. The information reproducing apparatus (S) according to claim 8, **characterized in that** the selection request device (6) prompts the user to select the type of the recording medium (10) by voice.

10. The information reproducing apparatus (S) according to any one of claims 1 to 9 , **characterized in that** the selection acceptance device (6) accepts the selection of the type of the recording medium (10) by recognizing the voice uttered by the user.

11. An information reproducing method of an information reproducing apparatus (S), **characterized in that** the information reproducing method comprises:
a process which prompts a user to select a type of a loaded recording medium (10);
a process which accepts selection of the type of the recording medium (10) from the user;
a process which obtains necessary information for reproduction from the recording medium (10) according to the selected type of the recording medium (10); and
a process which reproduces recorded information from the recording medium (10) based on the obtained information.

12. A recording medium on which an information reproduction processing program is computer-readably recorded, **characterized in that** the information reproduction processing program causes a computer included in an information reproducing apparatus (S) to perform the functions of:
prompting a user to select a type of a loaded recording medium (10);
accepting selection of the type of the recording medium (10) from the user;
obtaining necessary information for reproduction from the recording medium (10) according to the selected type of the recording medium (10); and
controlling the reproduction of recorded information from the recording medium (10) based on the obtained information.

## Patentansprüche

1. Informations-Reproduktionsgerät (S) mit einer Informations-Beschaffungseinrichtung (6), die die notwendige Information zur Reproduktion von einem beschriebenen Aufzeichnungsmedium (10) beschafft und mit einer Reproduktions-Steuereinrichtung (6), die eine Steuerung ausübt, um die aufgezeichnete Information von dem Aufzeichnungsmedium (10), basierend auf der beschafften Information, zu reproduzieren,
**dadurch gekennzeichnet, dass** das Informations-Reproduktionsgerät (S) die folgenden Teile aufweist:
eine Wahlabfrageeinrichtung (6), die einen Benutzer veranlasst, eine Type eines Aufzeichnungsmediums (10) zu wählen; und
eine Wahlakzeptanzeinrichtung (6), die die vom Benutzer getroffene Wahl der Type des Aufzeichnungsmediums (10) akzeptiert,
wobei die Informations-Beschaffungseinrichtung (6) die notwendige Information zur Reproduktion von dem Aufzeichnungsmedium (10) gemäß der gewählten Type des Aufzeichnungsmediums (10) beschafft.

2. Informations-Reproduktionsgerät (S) gemäß Anspruch 1,
**dadurch gekennzeichnet, dass** das Informations-Reproduktionsgerät (S) weiter die folgenden Teile aufweist:
eine Bestimmungseinrichtung (6), die die Type des Aufzeichnungsmediums (10) bestimmt; und
eine Modenwahl-Akzeptanzeinrichtung (6) bewirkt eine Akzeptanz aus der Benutzerwahl eines Bestimmungsmodus durch die Bestimmungseinrichtung (6) oder eines Wahlakzeptanzmodus von der Wahlakzeptanzeinrichtung (6), und wobei
die Informations-Beschaffungseinrichtung (6) die notwendige Information für die Reproduktion aus dem Aufzeichnungsmedium (10) gemäß der Type des Aufzeichnungsmediums (10) in dem gewählten Modus beschafft.

3. Informations-Reproduktionsgerät (S) nach Anspruch 2,
**dadurch gekennzeichnet, dass** die Bestimmungseinrichtung (6) wenigstens eine der folgenden Bestimmungen durchführt: eine erste Bestimmung, eine zweite Bestimmung oder eine dritte Bestimmung, wobei die erste Bestimmung festlegt, ob die Type des Aufzeichnungsmediums (10) eine CD oder eine DVD ist und die zweite Bestimmung bestimmt, ob die Type des Aufzeichnungsmediums (10) eine Einzelsession oder eine Mehrfachsession ist und die dritte Bestimmung festlegt, ob die Type des Aufzeichnungsmediums (10) eine Audio-CD oder eine CD-ROM ist und
wobei die Wahlakzeptanzeinrichtung (6) wenigstens eine der folgenden Akzeptanzen durchführt: eine erste Wahlakzeptanz, eine zweite Wahlakzeptanz oder eine dritte Wahlakzeptanz, wobei die erste Wahlakzeptanz die Wahl akzeptiert, nach der die Type des Aufzeichnungsmediums (10) die CD oder die DVD ist und wobei die zweite Wahlakzeptanz die Wahl akzeptiert, nach der die Type des Aufzeichnungsmediums (10) eine Einzelsession oder eine Mehrfachsession ist und wobei die dritte Wahlakzeptanz die Wahl akzeptiert, nach der die Type des Aufzeichnungsmediums (10) eine Audio-CD oder eine CD-ROM ist.

4. Informations-Reproduktionsgerät (S) nach Anspruch 2,
**dadurch gekennzeichnet, dass** die Wahlakzeptanzeinrichtung (6) die Wahl der Type des Aufzeichnungsmediums (10) während der Bestimmung der Type des Aufzeichnungsmediums (10) durch die Bestimmungseinrichtung (6) akzeptiert.

5. Informations-Wiedergabegerät (S) nach Anspruch 4,
**dadurch gekennzeichnet, dass** die Bestimmungseinrichtung (6) wenigstens eine der folgenden Bestimmungen durchführt: eine erste Bestimmung, eine zweite Bestimmung oder eine dritte Bestimmung, wobei die erste Bestimmung festlegt, ob die Type des Aufzeichnungsmediums (10) eine CD oder eine DVD ist, wobei die zweite Bestimmung festlegt, ob die Type des Aufzeichnungsmediums (10) eine Einzelsession oder eine Mehrfachsession ist und wobei die dritte Bestimmung festlegt, ob die Type des Aufzeichnungsmediums (10) eine Audio-CD oder eine CD-ROM ist, und
wobei die Wahlakzeptanzeinrichtung (6) wenigstens eine der folgenden Akzeptanzen durchführt: eine erste Wahlakzeptanz, eine zweite Wahlakzeptanz oder eine dritte Wahlakzeptanz, wobei die erste Wahlakzeptanz während der ersten Bestimmung durch die Bestimmungseinrichtung (6) die Wahl akzeptiert, nach der die Type des Aufzeichnungsmediums (10) die CD oder die DVD ist, wobei die zweite Wahlakzeptanz während der zweiten Bestimmung durch die Bestimmungseinrichtung (6) die Wahl akzeptiert, nach der die Type des Aufzeichnungsmediums eine Einzelsession oder eine Mehrfachsession ist und wobei die dritte Wahlakzeptanz während der dritten Bestimmung durch die Bestimmungseinrichtung (6) die Wahl akzeptiert, nach der die Type des Aufzeichnungsmediums (10) die Audio-CD oder die CD-ROM ist.

6. Informations-Reproduktionsgerät (S) nach Anspruch 5,
**dadurch gekennzeichnet, dass** die Bestimmungseinrichtung (6) die erste Bestimmung anhält und in die zweite Bestimmung überführt, wenn die erste Wahlakzeptanz durch die Wahlakzeptanzeinrichtung (6) während der ersten Bestimmung durchgeführt wird.

7. Informations-Reproduktionsgerät (S) nach den Ansprüchen 5 oder 6,
**dadurch gekennzeichnet, dass** die Bestimmungseinrichtung (6) die zweite Bestimmung anhält und in die dritte Bestimmung überführt, wenn die zweite Wahlakzeptanz durch die Wahlakzeptanzeinrichtung (6) während der zweiten Bestimmung durchgeführt wird.

8. Informations-Reproduktionsgerät (S) nach Anspruch 1,
**dadurch gekennzeichnet, dass** die Wahlakzeptanzeinrichtung (6) die Wahl der Type des Aufzeichnungsmediums (10) akzeptiert, während die Informations-Beschaffungseinrichtung (6) die notwendige Information zur Reproduktion beschafft.

9. Informations-Reproduktionsgerät (S) gemäß Anspruch 8,
**dadurch gekennzeichnet, dass** die Wahlabfrageeinrichtung (6) den Benutzer veranlasst, die Type des Aufzeichnungsmediums (10) durch seine Stimme zu wählen.

10. Informations-Reproduktionsgerät (S) nach einem der Ansprüche 1 bis 9,
**dadurch gekennzeichnet, dass** die Wahlakzeptanzeinrichtung (6) die Wahl der Type des Aufzeichnungsmediums (10) durch Erkennen der Stimme akzeptiert, die vom Benutzer herrührt.

11. Informations-Reproduktionsverfahren durch ein Informations-Reproduktionsgerät (S),
**dadurch gekennzeichnet, dass** das Informations-Reproduktionsverfahren die folgenden Schritte umfasst:
ein Verfahren, welches den Benutzer veranlasst, eine Type eines beschriebenen Aufzeichnungsmediums (10) zu wählen;
ein Verfahren, das die Wahl der Type des vom Benutzer gewählten Aufzeichnungsmediums (10) akzeptiert;
ein Verfahren, das die notwendige Information für die Reproduktion von dem Aufzeichnungsmedium (10) gemäß der gewählten Type des Aufzeichnungsmediums (10) beschafft; und
ein Verfahren, das die aufgezeichnete Information von dem Aufzeichnungsmedium (10), basierend auf der beschafften Information, reproduziert.

12. Ein Aufzeichnungsmedium, auf dem ein Informations-Reproduktionsprozessprogramm computerlesbar aufgezeichnet ist,
**dadurch gekennzeichnet, dass** das Informations-Reproduktionsprozessprogramm einen Computer in dem Informations-Reproduktionsgerät (S) veranlasst, die folgenden Funktionen durchzuführen:
es wird ein Benutzer veranlasst, eine Type eines beschriebenen Aufzeichnungsmediums (10) auszuwählen;
es wird die Wahl der Type des Aufzeichnungsmediums (10) vom Benutzer akzeptiert;
es wird die notwendige Information zur Reproduktion vom Aufzeichnungsmedium (10) gemäß der gewählten Type des Aufzeichnungsmediums (10) beschafft; und
es wird die Reproduktion der aufgezeichneten Information von dem Aufzeichnungsmedium (10), basierend auf der beschafften Information, gesteuert.

## Revendications

1. Appareil de reproduction d'informations (S) comprenant un dispositif d'obtention d'informations (6) qui obtient les informations nécessaires à des fins de reproduction à partir d'un support d'enregistrement chargé (10) et un dispositif de contrôle de reproduction (6) qui exerce un contrôle pour reproduire des informations enregistrées à partir du support d'enregistrement (10) en se basant sur les informations obtenues, **caractérisé en ce que** l'appareil de reproduction d'informations (S) comprend :
un dispositif de demande de sélection (6) qui invite un utilisateur à sélectionner un type de support d'enregistrement (10) ; et
un dispositif d'acceptation de sélection (6) qui accepte la sélection du type de support d'enregistrement (10) opérée par l'utilisateur,
dans lequel le dispositif d'obtention d'informations (6) obtient les informations nécessaires à des fins de reproduction à partir du support d'enregistrement (10) conformément au type de support d'enregistrement (10) qui a été sélectionné.

2. Appareil de reproduction d'informations (S) selon la revendication 1, **caractérisé en ce que** l'appareil de reproduction d'informations (S) comprend en outre :
un dispositif de détermination (6) qui détermine le type de support d'enregistrement (10) ; et
un dispositif d'acceptation de sélection de mode (6) qui accepte la sélection par l'utilisateur, soit d'un mode de détermination par le dispositif de détermination (6), soit d'un mode d'acceptation de sélection par le dispositif d'acceptation de sélection (6), et dans lequel
le dispositif d'obtention d'informations (6) obtient les informations nécessaires pour la reproduction à partir du support d'enregistrement (10) conformément au type de support d'enregistrement (10) dans le mode sélectionné.

3. Appareil de reproduction d'informations (S) selon la revendication 2, **caractérisé en ce que** le dispositif de détermination (6) met en oeuvre au moins une détermination choisie parmi le groupe comprenant une première détermination, une deuxième détermination et une troisième détermination, la première détermination déterminant le fait de savoir si le type de support d'enregistrement (10) est un CD ou un DVD, la deuxième détermination déterminant le fait de savoir si le type de support d'enregistrement (10) est une session unique ou une multisession, et la troisième détermination déterminant le fait de savoir si le type de support d'enregistrement (10) est un CD audio ou un CD-ROM, et
le dispositif d'acceptation de sélection (6) met en oeuvre au moins une acceptation de sélection choisie parmi le groupe comprenant une première acceptation de sélection, une deuxième acceptation de sélection et une troisième acceptation de sélection, la première acceptation de sélection acceptant la sélection du fait de savoir si le type de support d'enregistrement (10) est le CD ou le DVD, la deuxième acceptation de sélection acceptant la sélection du fait de savoir si le type de support d'enregistrement (10) est la session unique ou la multisession, et la troisième acceptation de sélection acceptant la sélection du fait de savoir si le type de support d'enregistrement (10) est le CD audio ou le CD-ROM.

4. Appareil de reproduction d'informations (S) selon la revendication 2, **caractérisé en ce que** le dispositif d'acceptation de sélection (6) accepte la sélection du type de support d'enregistrement (10) au cours de la détermination du type de support d'enregistrement (10) par le dispositif de détermination (6).

5. Appareil de reproduction d'informations (S) selon la revendication 4, **caractérisé en ce que** le dispositif de détermination (6) met en oeuvre au moins une détermination choisie parmi le groupe comprenant une première détermination, une deuxième détermination et une troisième détermination, la première détermination déterminant le fait de savoir si le type de support d'enregistrement (10) est un CD ou un DVD, la deuxième détermination déterminant le fait de savoir si le type de support d'enregistrement (10) est une session unique ou une multisession, et la troisième détermination déterminant le fait de savoir si le type de support d'enregistrement (10) est un CD audio ou un CD-ROM, et
le dispositif d'acceptation de sélection (6) met en oeuvre au moins une acceptation de sélection choisie parmi le groupe comprenant une première acceptation de sélection, une deuxième acceptation de sélection et une troisième acceptation de sélection, la première acceptation de sélection acceptant la sélection du fait de savoir si le type de support d'enregistrement (10) est le CD ou le DVD au cours de la première détermination par le dispositif de détermination (6), la deuxième acceptation de sélection acceptant la sélection du fait de savoir si le type de support d'enregistrement (10) est la session unique ou la multisession au cours de la deuxième détermination par le dispositif de détermination (6), et la troisième acceptation de sélection acceptant la sélection du fait de savoir si le type de support d'enregistrement (10) est le CD audio ou le CD-ROM au cours de la troisième détermination par le dispositif de détermination (6).

6. Appareil de reproduction d'informations (S) selon la revendication 5, **caractérisé en ce que** le dispositif de détermination (6) met fin à la première détermination et passe à la deuxième détermination dans le cas où la première acceptation de sélection est mise en oeuvre par le dispositif d'acceptation de sélection (6) au cours de la première détermination.

7. Appareil de reproduction d'informations (S) selon la revendication 5 ou 6, **caractérisé en ce que** le dispositif de détermination (6) met fin à la deuxième détermination et passe à la troisième détermination dans le cas où la deuxième acceptation de sélection est mise en oeuvre par le dispositif d'acceptation de sélection (6) au cours de la deuxième détermination.

8. Appareil de reproduction d'informations (S) selon la revendication 1, **caractérisé en ce que** le dispositif d'acceptation de sélection (6) accepte la sélection du type de support d'enregistrement (10) tandis que le dispositif d'obtention d'informations (6) obtient les informations nécessaires pour la reproduction.

9. Appareil de reproduction d'informations (S) selon la revendication 8, **caractérisé en ce que** le dispositif de demande de sélection (6) invite l'utilisateur à sélectionner le type de support d'enregistrement (10) par la voix.

10. Appareil de reproduction d'informations (S) selon l'une quelconque des revendications 1 à 9, **caractérisé en ce que** le dispositif d'acceptation de sélection (6) accepte la sélection du type de support d'enregistrement (10) en reconnaissant la voix de l'utilisateur.

11. Procédé de reproduction d'informations d'un appareil de reproduction d'informations (S), **caractérisé en ce que** le procédé de reproduction d'informations comprend :
un procédé qui invite un utilisateur à sélectionner un type de support d'enregistrement chargé (10) ;
un procédé qui accepte la sélection du type de support d'enregistrement (10) par l'utilisateur ;
un procédé qui obtient les informations nécessaires pour la reproduction à partir du support d'enregistrement (10) conformément au type sélectionné de support d'enregistrement (10) ; et
un procédé qui reproduit des informations enregistrées à partir du support d'enregistrement (10), en se basant sur les informations obtenues.

12. Support d'enregistrement sur lequel un programme de traitement de reproduction d'informations a été enregistré pour être lu par un ordinateur, **caractérisé en ce que** le programme de traitement de reproduction d'informations fait en sorte qu'un ordinateur inclut dans un appareil de reproduction d'informations (S) mette en oeuvre les fonctions consistant à :
inviter un utilisateur à sélectionner un type de support d'enregistrement chargé (10) ;
accepter la sélection du type de support d'enregistrement (10) par l'utilisateur ;
obtenir les informations nécessaires pour la reproduction à partir du support d'enregistrement (10) conformément au type sélectionné de support d'enregistrement (10) ; et
contrôler la reproduction d'informations enregistrées à partir du support d'enregistrement (10), en se basant sur les informations obtenues.
